Europäisches Patentamt

European Patent Office

Office européen des brevets

(19)

(11) EP 0 827 602 B1

(12) EUROPÄISCHE PATENTSCHRIFT

(45) Veröffentlichungstag und Bekanntmachung des Hinweises auf die Patenterteilung:
24.02.1999 Patentblatt 1999/08

(51) Int Cl.$^6$: G05B 17/02, G05B 13/02, G05B 23/02

(21) Anmeldenummer: 96911930.4

(22) Anmeldetag: 30.04.1996

(86) Internationale Anmeldenummer:
PCT/DE96/00748

(87) Internationale Veröffentlichungsnummer:
WO 96/35153 (07.11.1996 Gazette 1996/49)

(54) **ANORDNUNG ZUR MODELLIERUNG EINES DYNAMISCHEN PROZESSES**

ARRANGEMENT FOR MODELLING A DYNAMIC PROCESS

SYSTEME DE MODELISATION D'UN PROCESSUS DYNAMIQUE

(84) Benannte Vertragsstaaten:
AT BE CH DE ES FR GB IT LI NL SE

(30) Priorität: 04.05.1995 DE 19516426

(43) Veröffentlichungstag der Anmeldung:
11.03.1998 Patentblatt 1998/11

(73) Patentinhaber: SIEMENS AKTIENGESELLSCHAFT
80333 München (DE)

(72) Erfinder:
• HÖHFELD, Markus
D-81373 München (DE)
• KIRCHBERG, Karl-Heinz
D-76187 Karlsruhe (DE)
• OBRADOVIC, Dragan
D-81669 München (DE)

(56) Entgegenhaltungen:
EP-A- 0 292 749          EP-A- 0 540 168
WO-A-93/15448          DE-A- 4 323 439

• PATENT ABSTRACTS OF JAPAN vol. 15, no. 433 (P-1271), 5.November 1991 & JP,A,03 179502 (HITACHI), 5.August 1991,
• IEE Proceedings-D, 138(1991) Sept., No. 5, Teil D, Stevenage, Herts., GB, Seiten 431-438, K.J. Hunt und D. Sbarbaro: "Neural networks for nonlinear internal model control"

**Beschreibung**

Die Erfindung betrifft eine Anordnung zur Modellierung eines nichtlinearen, dynamischen Prozesses nach dem Oberbegriff des Anspruchs 1.

Aus der EP 0 292 749 A2 ist eine Anordnung zur Modellierung eines dynamischen Prozesses bekannt, bei der als Regelstreckenmodell ein Verzögerungsglied n-ter Ordnung mit gleichen Zeitkonstanten zugrundegelegt wird. Es handelt sich dabei um ein lineares, dynamisches Prozeßmodell. Ein lineares Prozeßmodell genügt in den meisten Fällen zur Prozeßbeschreibung, insbesondere wenn nur kleine Anregungen zulässig sind. Es gibt aber auch Anwendungen, bei denen bei Sollwertänderungen der gesamte Stellbereich durchfahren wird. Das ist z. B. bei Durchflußregelungen der Fall, in denen das Stellglied ein Ventil oder eine Klappe ist und der Durchfluß über die Stellung des Stellglieds bestimmt wird. Die Stellung des Stellglieds durchfährt dabei den gesamten Stellbereich. Da diese Stellglieder stark nichtlineares Verhalten zeigen, ist die Approximation des Streckenverhaltens durch ein lineares Prozeßmodell nicht mehr ausreichend. Bei einem Ventil beispielsweise dient zur Beschreibung des nichtlinearen Verhaltens eine Ventilkennlinie, eine nichtlineare, statische Verstärkungskennlinie, deren Wert vom jeweiligen Arbeitspunkt abhängig ist. Das hat zur Folge, daß sich die Regelgüte eines festeingestellten PID-Reglers mit dem Arbeitspunkt ändert.

Aus der DE-A-43 23 439 sowie aus IEE Proceedings-D, 138 (1991), Sept., No. 5, Part D, Stevenage, Herts., GB, Seiten 431 - 438, K. J. Hunt at D. Sbarbaro: "Neural networks for nonlinear internal model control" sind Anordnungen zur Modellierung eines nichtlinearen Prozesses bekannt, bei welchen neuronale Netze als Modell eingesetzt werden.

Der Erfindung liegt die Aufgabe zugrunde, eine Anordnung zur Modellierung eines nichtlinearen, dynamischen Prozesses zu schaffen, die auch bei nichtlinearen Prozessen gute Ergebnisse liefert und eine genauere Identifikation zur Vermeidung der genannten Nachteile ermöglicht.

Zur Lösung dieser Aufgabe weist die neue Anordnung der eingangs genannten Art das im kennzeichnenden Teil des Anspruchs 1 angegebene Merkmal auf. In den Unteransprüchen sind vorteilhafte Weiterbildungen der Anordnung beschrieben.

Die Erfindung hat den Vorteil, daß die spezielle nichtlineare Prozeßeigenschaft in der Anordnung zur Modellierung mit berücksichtigt wird. Das Modell kann sowohl zur Regleroptimierung als auch zur Prozeßdiagnose verwendet werden. Bei der Regleroptimierung werden Parameter eines Reglers in Abhängigkeit von den Parametern des Prozeßmodells eingestellt. In der Prozeßdiagnose wird die ermittelte Kennlinie mit der beispielsweise in einem Datenblatt angegebenen Kennlinie verglichen. Diese Kennlinie kann sich durch Verschleiß im Betrieb oder durch die Einbausituation eines Stellglieds verändern. Weicht die ermittelte Kennlinie stark von den Angaben im Datenblatt ab, dann muß das Stellglied ausgetauscht werden.

Zur Regleroptimierung geht man häufig von einem PTn-Modell mit folgender Übertragungsfunktion im Laplace-Bereich aus:

$$\frac{x(s)}{y(s)} = \frac{K}{(1 + T^{*}s)^{n}}$$

Dabei bezeichnen x die Ausgangs- und y die Eingangsgröße des Modells, der Verstärkungsfaktor K, die Zeitkonstante T und die Ordnung n seine Parameter. Bei einem Prozeß mit einer nichtlinearen, statischen Verstärkungskennlinie ist die Verstärkung vom Arbeitspunkt, d. h. von der Ausgangsgröße x, abhängig:

$$K = K0 + f(x)$$

Die Verstärkung Kp und die Nachstellzeit Tn eines PI-Reglers können für dieses Prozeßmodell nach dem Betragsoptimum festgelegt werden zu:

$$Kp = \frac{1}{4^{*}K} {}^{*} \frac{n+2}{n\text{-}1}$$

$$Tn = \frac{n+2}{3} {}^{*} T$$

Die arbeitspunktabhängige Verstärkung K des Prozesses wirkt sich nur auf die Reglerverstärkung Kp aus, nicht dagegen auf die Nachstellzeit Tn des PI-Reglers. Hat man den Prozeß in einem Arbeitspunkt mit geringer Verstärkung identifiziert, dann wird nach dieser Formel ein PI-Regler mit hoher Verstärkung berechnet. Dieser Regler kompensiert damit die niedrige Streckenverstärkung. Gelangt man nun mit dem Regelkreis in einen Arbeitsbereich mit hoher Streckenverstärkung, so wird die Reglerverstärkung durch das nichtlineare, dynamische Prozeßmodell zurückgenommen, und es wird vorteilhaft vermieden, daß die Regelung instabil wird. Umgekehrt wird in einem Arbeitsbereich mit geringer Streckenverstärkung die Reglerverstärkung erhöht, so daß der Regler nicht träger wird und Regelabweichungen weiterhin gut ausgeregelt werden können.

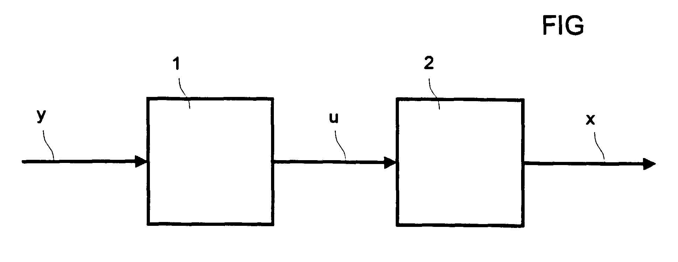

Anhand der Zeichnung, in der ein Blockschaltbild einer erfindungsgemäßen Anordnung dargestellt ist, werden im folgenden die Erfindung sowie Ausgestaltungen und Vorteile näher erläutert.

Eine Anordnung zur Modellierung eines nichtlinearen, dynamischen Prozesses besteht entsprechend der Figur aus einer Reihenschaltung eines neuronalen Netzes 1 und eines dynamischen Prozeßmodells 2. Bei dem neuronalen Netz 1 handelt es sich um ein dreilagiges Feedforward-Netz mit einem Eingang y und einem Ausgang u. Damit wird die statische Kennlinie nachgebildet. Das dynamische Prozeßmodell 2 ist ein Übertragungsglied mit linearem, dynamischem Verhalten, hier ein PTn-Modell, auf dessen Eingang der Ausgangswert u des neuronalen Netzes 1 geführt ist und das einen Ausgangswert x liefert.

Die Übertragungsfunktion des PTn-Modells lautet dann:

$$G(s) = \frac{x(s)}{u(s)} = \frac{K}{(1+T^{\star}s)^{n}} \qquad (1)$$

Dabei bezeichnen u(s) und x(s) jeweils die Laplace-Transformierte des Eingangssignals u(t) bzw. des Ausgangssignals x(t). Wird die Anordnung zur Modellierung eines dynamischen Prozesses in einem geschlossenen Regelkreis verwendet, dann stellt das Ausgangssignal x(t) des dynamischen Prozeßmodells 2 die Regelgröße dar; y(t) ist das Stellsignal des Reglers und u(t) ist eine modellinterne Zwischengröße. Zur Identifikation des Prozesses wird der Regelkreis aus einem stationären Zustand heraus angeregt. Von dem Einschwingvorgang des Regelkreises wird eine Anzahl anz äquidistanter Stützwerte der Stellgröße y und der Regelgröße x abgespeichert. Die Abtastzeit wird mit Ta bezeichnet. Die gemessenen Werte werden aufbereitet, so daß sie auf ihren jeweiligen Anfangswert y(1) bzw. x(1) bezogen sind:

$$\Delta y(k) = y(k)\text{-}y(1) \qquad (2)$$

$$\Delta x(k) = x(k)\text{-}x(1) \qquad (3)$$

mit k = anz ... 1. Diese Werte sind die zur Identifikation verwendeten Ein- und Ausgangsgrößen.

Das PTn-Modell wird durch folgende Zustandsdifferenzengleichungen beschrieben:

$$\underline{Z}(k+1) = \underline{\Phi}^{\star}\underline{Z}(k)+\underline{H}^{\star}u(k) \qquad (4)$$

und

$$x(k+1) = z_{n}(k+1) \qquad (5)$$

Bei dieser Darstellung sind u die Eingangsgröße, $\underline{Z}$ = $(z_1, z_2, ..., z_n)$ ein Vektor mit den internen Zustandsgrößen des PTn-Modells und x die Ausgangsgröße. Die Matrix $\underline{\Phi}$ wird als Transitionsmatrix bezeichnet und hat n Zeilen sowie n Spalten. Der Wert n bezeichnet die Modellordnung. $\underline{H}$ ist ein Eingangsvektor mit n Zeilen und einer Spalte. Die Berechnung erfolgt für diskrete Zeitwerte k*Ta, also bei ganzzahligen Vielfachen der Abtastzeit Ta. Die Elemente der Transitionsmatrix $\underline{\Phi}$ ergeben sich für das PTn-Modell nach folgender Rechenvorschrift:
mit

$$h = Ta/T: \qquad (6)$$

für $i \geq j$:

$$\Phi(i,j)=e^{-h}*\frac{h^{i-j}}{(i-j)!} \tag{7}$$

sonst:

$$\Phi(i,j)=0.0$$

Die Parameter i und j sind hier Laufvariable mit i = 1 ... n für die Zeilen und j = 1 ... n für die Spalten. Die Rechenvorschrift für den Eingangsvektor $\underline{H}$ lautet:

$$H(i) = K * \left( 1 - \sum_{j=1}^{i} \Phi(i,j) \right) \tag{8}$$

Da die Verstärkung mit dem neuronalen Netz 1 nachgebildet werden soll, wird für das PTn-Modell K = 1 gesetzt. Die Ableitungen der Transitionsmatrix und des Eingangsvektors nach dem Parameter h lauten:
für i = j :

$$\frac{\partial \Phi(i,j)}{\partial h} = -e^{-h} \tag{9}$$

sonst:

$$\frac{\partial \Phi(i,j)}{\partial h} = e^{-h} * \left( \frac{h^{i-j-1}}{(i-j-1)!} - \frac{h^{i-j}}{(i-j)!} \right) = \Phi(i-1,j) - \Phi(i,j) \tag{10}$$

und

$$\frac{\partial H(i)}{\partial h} = (-K) * \sum_{j=1}^{i} \frac{\partial \Phi(i,j)}{\partial h} \tag{11}$$

Mit Produkt- und Kettenregel ergibt sich dann folgende rekursive Formel für die Ableitung der Differenzengleichung nach dem Parameter h:

$$\frac{\partial \underline{Z}(k+1)}{\partial h} = \underline{\Phi}^* \frac{\partial \underline{Z}(k)}{\partial h} + \frac{\partial \underline{\Phi}}{\partial h} * \underline{Z}(k) + \frac{\partial \underline{H}}{\partial h} * u(k) \tag{12}$$

$$\frac{\partial x(k)}{\partial h} = \frac{\partial z_n(k)}{\partial h} \tag{13}$$

mit der Anfangsbedingung:

$$\frac{\partial \underline{Z}(0)}{\partial h} = 0 \qquad (14)$$

Das verwendete neuronale Netz wird mit folgender Funktion beschrieben:

$$u = NN(y) = \theta a + \sum_{i=1}^{anz\_hidden}\left(wai * \tanh(whi * y + \theta hi)\right) \qquad (15)$$

Diese Gleichungen beschreiben das Übertragungsverhalten eines dreilagigen Feedforward-Netzes mit einem Eingang, einem Ausgang und "anz_hidden" Neuronen in der Zwischenschicht. In diesen Gleichungen ist der Wert y der Eingangswert und der Wert u der Ausgangswert des neuronalen Netzes. Die Parameter θa, wa, wh und θh sind die Netzparameter, mit denen das nichtlineare Verhalten des Netzes festgelegt wird. Die Funktion tanh ist die Aktivierungsfunktion in den Neuronen der Zwischenschicht. tanh ist der Tangenshyperbolikus. Er ist folgendermaßen definiert:

$$\tanh(x) = \frac{e^{x} - e^{-x}}{e^{x} + e^{-x}}$$

Für den Offset im Ausgangsneuron soll nun gelten:

$$\theta a = - \sum_{i=1}^{anz\_hidden}\left(wai * \tanh(\theta hi)\right) \qquad (16)$$

An dieser Stelle wird Vorwissen explizit eingebracht. Durch diese Festlegung wird die Bedingung y(0) = 0 sichergestellt. Für die Ermittlung des Prozeßmodells müssen daher Stell- und Istwerte auf den jeweiligen Anfangswert bezogen sein.

Die Ableitungen der Funktion nach den Netzparametern werden nun angegeben.

Als weitere Hilfsgröße benötigt man den Ausgangswert eines Neurons der Zwischenschicht:

$$yHi = \tanh(whi * y + \theta hi) \qquad (17)$$

Mit dieser Hilfsgröße und Gleichung (16) läßt sich Gleichung (15) folgendermaßen umformen:

$$u = NN(y) = \sum_{i=1}^{anz\_hidden} wai * \left(yHi - \tanh(\theta hi)\right) \qquad (18)$$

Die Ableitungen des Netzausgangs u in bezug auf die Gewichte und Offsets lauten dann:

$$\frac{\partial u}{\partial wai} = yHi - \tanh(\theta hi) \qquad (19)$$

$$\frac{\partial u}{\partial whi} = wai * (1 - yHi^2) * y \qquad (20)$$

$$\frac{\partial u}{\partial \theta h} = wai * \left[ \left( 1 - yHi^2 \right) + \left( 1 - \tanh(\theta hi)^2 \right) \right] \tag{21}$$

Formal lassen sich die Offsets $\theta hi$ als Gewichte zu einem zusätzlichen Eingabeneuron mit dem konstanten Wert 1 auffassen. Es wird deshalb im folgenden nicht mehr zwischen Offsets und Gewichten unterschieden. Diese Werte werden einheitlich als Parameter des Netzes bezeichnet. Nachfolgend wird daher die Ableitung $\partial u/\partial w$ synonym für die Ableitungen $\partial u/\partial wa$, $\partial u/\partial wh$ und $\partial u/\partial \theta h$ verwendet.

Der berechnete Ausgangswert der Anordnung wird mit der aufbereiteten, normierten Regelgröße (Gleichung (3)) verglichen. Mit einer numerischen Optimierung werden die Parameter des neuronalen Netzes 1 und des PTn-Modells 2 so verändert, daß die Abweichung zwischen der berechneten und der gemessenen Regelgröße minimal wird. Dies wird für die Modellordnungen n = 1 ... 10 jeweils getrennt ausgeführt. Es werden dann die Modellordnung und die dabei ermittelten Parameter ausgewählt, bei denen der Fehler den geringsten Wert hat.
Die Anzahl der Neuronen in der Zwischenschicht des neuronalen Netzes 1 kann ebenfalls variiert werden. In den meisten Fällen sind weniger als zehn Neuronen in der Zwischenschicht ausreichend.

Die Parameter von Netz und Prozeßmodell werden durch numerische Optimierung berechnet. Es kann hier ein quasi-Newton-Verfahren mit dem BFGS-Algorithmus verwendet werden, das aus "Optimization TOOLBOX For Use with MATLAB®" User's Guide, The Math Works, Inc., Natick, MA, January 1994, bekannt ist. Dafür benötigt man das Übertragungsverhalten der Reihenschaltung des neuronalen Netzes 1 und des PTn-Modells 2 sowie die Ableitungen der Fehlerfunktion nach den gesuchten Parametern:

$$E = \sum_{k=1}^{ant} error(k)^2 \tag{22}$$

mit

$$error(k) = x(k) - \Delta x(k) \tag{23}$$

Der Wert x ist der Ausgangswert des nichtlinearen, dynamischen Modells und die Werte $\Delta x$ sind die normierten, gemessenen Ausgangswerte des realen Prozesses. Der Fehler E ist ein Maß für die Abweichung des berechneten Modells vom Prozeß.

Die Netzparameter werden mit Zufallswerten als Startwerte für die Optimierung vorbesetzt; der Parameter h wird auf den Anfangswert h = 1 gesetzt.

Die Ableitungen der Fehlerfunktion nach den gesuchten Netzparametern lauten:

$$\frac{\partial E}{\partial wa} = \sum_{k=1}^{ant} \frac{\partial error(k)^2}{\partial wa} = \sum_{k=1}^{ant} error(k) * \frac{\partial x(k)}{\partial wa} \tag{24a}$$

$$\frac{\partial E}{\partial wh} = \sum_{k=1}^{ant} \frac{\partial error(k)^2}{\partial wh} = \sum_{k=1}^{ant} error(k) * \frac{\partial x(k)}{\partial wh} \tag{24b}$$

$$\frac{\partial E}{\partial \theta h} = \sum_{k=1}^{ans} \frac{\partial error(k)^2}{\partial \theta h} = \sum_{k=1}^{ans} error(k) * \frac{\partial x(k)}{\partial \theta h} \qquad (24c)$$

und analog nach dem Parameter h des PTn-Modells:

$$\frac{\partial E}{\partial h} = \sum_{k=1}^{ans} error(k) * \frac{\partial x(k)}{\partial h} \qquad (25)$$

Diese Ableitungen enthalten die Information darüber, um welchen Wert der Optimierungs-Algorithmus die gesuchten Parameter verändern muß.

Das neuronale Netz 1 und das PTn-Modell 2 sind in Reihe geschaltet. Die Eingangsgröße u(k) des dynamischen Modells 2 ist damit der Ausgangswert des neuronalen Netzes 1. Die Reihenschaltung läßt sich nun folgendermaßen schreiben:

$$x(k) = G[NN(\Delta y(k))] \qquad (26)$$

G soll hier das Übertragungsverhalten des linearen PTn-Modells 2 darstellen, NN ist das Übertragungsverhalten des neuronalen Netzes 1. Die gemessenen, normierten Stellgrößenwerte $\Delta y$ werden auf das neuronale Netz geschaltet. Da das lineare übertragungsglied 2 dem neuronalen Netz 1 nachgeschaltet ist, gilt für die Ableitungen von x nach den Netzparametern w:

$$\frac{\partial x(k)}{\partial w} = G\left[\frac{\partial NN(\Delta y(k))}{\partial w}\right] \qquad (27)$$

In dieser Darstellung wird nicht zwischen wa, wh und $\theta h$ unterschieden. Diese Gleichung besagt, daß sich die gesuchten Ableitungen $\partial x(k)/\partial w$ in einfacher Weise aus den Ableitungen $\partial NN(\Delta y(k))/\partial w$ des Netzwerkes ergeben.

Verwendet man die Ableitungen des Netzes als Eingangs folge für das lineare System G, so ergibt die dazugehörige Ausgabefolge gerade die gesuchten Ableitungen $\partial x(k)/\partial w$.

Da die Darstellung des linearen Systems im Zustandsraum und als Übertragungsfunktion äquivalent sind, verwendet man zur Berechnung von $\partial x(k)/\partial w$ die Zustandsraumdarstellung mit den Matrizen $\underline{\Phi}$ und $\underline{H}$ und den Eingangswert $\partial NN(\Delta y(k))/\partial w$.

Die Ableitungen der Fehlerfunktion nach den Netzparametern ergeben sich dann durch Gewichtung der Ableitungen $\partial x(k)/\partial w$ mit den Fehlerwerten error(k) nach Gleichung (23).

Der Wert von h muß positiv sein. Er wird daher auf einen Minimalwert begrenzt.

Die Kennlinie wird für den Bereich, in dem sich das Stellsignal y bewegte, berechnet. Soll beispielsweise die gesamte Kennlinie eines Ventils berechnet werden, so muß bei der Anregung auch der gesamte Stellbereich durchfahren werden, andernfalls wird die Kennlinie nur abschnittsweise berechnet. Wird der gesamte Stellbereich durchfahren, so ist eine doppelte Rampenanregung, bei der der Stellbereich einmal in positiver und dann in negativer Richtung durchfahren wird, prinzipiell ausreichend. Die Anregung darf allerdings nicht zu schnell erfolgen, so daß die Regelgröße dem Anregungssignal folgen kann. Weiterhin muß die Anregung der Regelstrecke aus einem stationären Zustand heraus erfolgen, damit die Bedingung nach Gleichung (14) erfüllt ist.

Die Funktion des neuronalen Netzes 1 mit einem Eingang und einem Ausgang kann auch durch einen konventionellen Kennlinienbaustein nachgebildet werden. Die zur Festlegung des Kennlinienbausteins erforderlichen Stützwerte werden der Kennlinie des neuronalen Netzes entnommen. In diesem Fall wird die erfindungsgemäße Reihenschaltung eines neuronalen Netzes und eines Übertragungsglieds mit linearem, dynamischem Verhalten lediglich zum Entwurf der Anordnung benötigt. Dabei ist besonders die Lernfähigkeit neuronaler Netze von Vorteil.

**Patentansprüche**

1. Anordnung zur Modellierung eines nichtlinearen, dynamischen Prozesses, die ein Übertragungsglied (2) mit linearem, dynamischem Verhalten aufweist, dadurch gekennzeichnet, daß ein neuronales Netz (1) zu dem Übertragungsglied (2) mit linearem, dynamischem Verhalten in Reihe geschaltet ist.

2. Anordnung nach Anspruch 1, **dadurch gekennzeichnet,** daß das Übertragungsglied (2) ein PTn-Modell ist, dessen Parameter Verstärkung K, Zeitkonstante T und Ordnung n einstellbar sind.

3. Anordnung nach Anspruch 1 oder 2, **dadurch gekennzeichnet,** daß das neuronale Netz (1) ein dreilagiges Feedforward-Netz ist und einen Eingang und einen Ausgang aufweist.

4. Anordnung nach einem der vorhergehenden Ansprüche, **dadurch gekennzeichnet,** daß das neuronale Netz (1) derart ausgestaltet ist, daß es die statische Kennlinie des Prozesses nachbildet.

**Claims**

1. Arrangement for modelling a non-linear, dynamic process, which has a transmission element (2) with linear, dynamic characteristics, characterized in that a neuronal network (1) is connected in series with the transmission element (2) with linear, dynamic characteristics.

2. Arrangement according to claim 1, characterized in that the transmission element (2) is a PTn-model, the parameters of which, gain K, time constant T and order n, are adjustable.

3. Arrangement according to claim 1 or 2, characterized in that the neuronal network (1) is a three-layered feedforward network and has an input and an output.

4. Arrangement according to one of the preceding claims, characterized in that the neuronal network (1) is designed in such a way that it simulates the static characteristic of the process.

**Revendications**

1. Dispositif de modélisation d'un processus dynamique non linéaire, lequel dispositif comporte un organe de transmission (2) qui présente un comportement dynamique linéaire, caractérisé en ce qu'un réseau neuronal (1) est monté en série avec l'organe de transmission (2) qui présente un comportement dynamique linéaire.

2. Dispositif selon la revendication 1, caractérisé en ce que l'organe de transmission (2) est un modèle PTn dont les paramètres amplification K, constante de temps T et ordre n sont réglables.

3. Dispositif selon la revendication 1 ou 2, caractérisé en ce que le réseau neuronal (1) est un réseau d'anticipation à trois couches et comporte une entrée et une sortie.

4. Dispositif selon une des revendications précédentes, caractérisé en ce que le réseau neuronal (1) est conçu de telle sorte qu'il reproduit la caractéristique statique du processus.

FIG

**1**

y

**2**

u

x